# EUROPÄISCHE PATENTSCHRIFT

(11) **EP 4 039 081 B1**
(45) Veröffentlichungstag und Bekanntmachung des Hinweises auf die Patenterteilung: **14.05.2025**
(21) Anmeldenummer: 21155180.9
(22) Anmeldetag: 04.02.2021
(51) Int. Cl.: A01F 15/14

(54) **GARNKNOTER UND VERFAHREN ZUR BILDUNG ZWEIER KNOTEN IN EINEM GARN**
YARN KNOT AND METHOD FOR FORMING TWO KNOTS IN A YARN
NOUEUR DE FIL ET PROCÉDÉ DE FORMATION DE DEUX N UDS DANS UN FIL

(43) Veröffentlichungstag der Anmeldung: 10.08.2022
(73) Patentinhaber: Schumacher Bergische Werke GmbH, 42929 Wermelskirchen (DE)
(72) Erfinder: BALDSIEFEN, Karsten, 51789 Lindlar (DE); HÖLLER, Felix, 51789 Lindlar (DE); KÖNIG, Bartlomiej Mateusz, 42853 Remscheid (DE); ACIMAS, Andreas, 42699 Solingen (DE); FLANHARDT, Michael, 40764 Langenfeld (DE)
(74) Vertreter: Neumann Müller Oberwalleney Patentanwälte PartG mbB

(56) Entgegenhaltungen:
- EP-B1- 1 745 691
- DE-U1- 20 317 302
- US-B2- 9 883 633

## Beschreibung

Die Erfindung betrifft einen Garnknoter zur Bildung zweier Knoten in einem Garnstrangpaar, wobei der Garnknoter eine um eine Antriebsachse intermittierend drehbar angetriebene Antriebsscheibe und einen von der Antriebsscheibe um eine Knoterachse drehbar angetriebenen Knoterhaken zur Bildung von zwei aufeinanderfolgenden Knoten in dem Garnstrangpaar durch zwei vollständige Umdrehungen des Knoterhakens bei einer Umdrehung der Antriebsscheibe aufweist. Ferner weist der Garnknoter eine Garnhalterung zum Klemmen des Garnstrangpaares zwischen einem ersten Klemmelement und einem von der Antriebsscheibe drehbar angetriebenen zweiten Klemmelement der Garnhalterung sowie ein Garnmesser zum Durchtrennen des Garnstrangpaares auf.

Garnknoter oder -knüpfer werden vorwiegend in mobilen Packenpressen für die Bildung von Gebinden aus Stroh, Heu, Silage und ähnlichem Gut sowie in der Wertstoffverwendung, zum Beispiel für die Bündelung von Papier, Textilien, dünnen Blechen und dergleichen eingesetzt. Mit solchen Garnknotern ausgerüstete Binde- oder Bündeleinrichtungen können auch Bestandteil von Verpackungsanlagen für die Umschnürung von Packen, Ballen oder Bündel aus anderen hierfür geeigneten Materialien sein.

In stationären oder mobilen Packen- oder Großpackenpressen wird das Pressgut in einen im Querschnitt zumeist rechteckigen Presskanal verdichtet und zu einem rechteckigen Gutstrang gepresst. Dieser wird in quaderförmige Packen - gebräuchlich ist auch die Bezeichnung Vierkantballen - abgeteilt, deren Ober- und Unterseite sowie deren Außenseiten in Längsrichtung des Pressenkanals mit mehreren Garnsträngen umreift werden, die vor dem Ausstoß des Packens verknotet werden.

Ein eingangs beschriebener Garnknoter ist beispielsweise aus der EP 1 745 691 B1 bekannt. Mehrere dieser Garnknoter werden von einer Knoterwelle gemeinsam angetrieben. Jeder Garnknoter weist hierbei eine Antriebsscheibe auf, die auf die Knoterwelle aufgefädelt und drehfest mit dieser verbunden ist. Die Antriebsscheibe weist über Teilumfänge mehrere Verzahnungsabschnitte auf, die mit Ritzeln von Antriebskomponenten, wie etwa dem Knoterhaken und dem drehbaren Klemmelement der Garnhalterung, kämmen, um diese drehend anzutreiben. Die Verzahnungsabschnitte sind zu zwei Gruppen von Verzahnungsabschnitten zusammengefasst, die jeweils zur Bildung eines der beiden Knoten dienen. Die Verzahnungsabschnitte einer Gruppe sind auf unterschiedlichen Durchmessern und über dem Umfang versetzt zueinander angeordnet. Die Ritzel der Antriebskomponenten sind ebenfalls über dem Umfang versetzt zueinander angeordnet und auf dem Durchmesser des jeweiligen Verzahnungsabschnitts angeordnet. Die Verzahnungsabschnitte zum Antreiben der Garnhalterung sind derart in Drehrichtung der Antriebsschreibe vorlaufend zu den den Knoterhaken antreibenden Verzahnungsabschnitten angeordnet, dass beim Bilden eines Knotens die Garnhalterung zeitlich vor dem Knoterhaken beginnt zu drehen.

Bei dieser Anordnung lassen sich bei einer vollen Umdrehung der Antriebsscheibe zwei Knoten knüpfen. Es werden Garnhalterungen mit Mitnehmer und einem Garnhalter verwendet. Der Mitnehmer ist aus mehreren beabstandet zueinander angeordneten Mitnehmerscheiben gestaltet, zwischen die ein kammartiger Garnhalter eingreift. Der Mitnehmer wird um eine Mitnehmerachse drehend angetrieben, die in etwa in Richtung der Zuführrichtung des Garns zum Knoter ausgerichtet ist. Das Garn wird denn zwischen dem Mitnehmer und dem Garnhalter geklemmt.

Ein Nachteil des beschriebenen Garnknoters nach dem Stand der Technik liegt darin, dass zwischen der Bildung zweier Knoten ein Garnrest entsteht, der nicht mit dem Garnstrangpaar am Gebinde verknotet ist und lose als Abfall auf das Gebinde fällt.

Aufgabe der vorliegenden Erfindung ist es, einen Garnknoter und ein Verfahren zur Bildung von Knoten bereitzustellen, bei dem ein Garnrest vermieden wird.

Die Aufgabe wird durch einen Garnknoter gelöst, der eine um eine Antriebsachse intermittierend drehbar angetriebene Antriebsscheibe und einen von der Antriebsscheibe um eine Knoterachse drehbar angetriebenen Knoterhaken zur Bildung von zwei aufeinanderfolgenden Knoten in dem Garnstrangpaar durch zwei vollständige Umdrehungen des Knoterhakens bei einer Umdrehung der Antriebsscheibe aufweist. Ferner weist der Garnknoter eine Garnhalterung zum Klemmen des Garnstrangpaares zwischen einem ersten Klemmelement und einem von der Antriebsscheibe drehbar angetriebenen zweiten Klemmelement der Garnhalterung sowie ein Garnmesser zum Durchtrennen des Garnstrangpaares auf. Das drehbare zweite Klemmelement der Garnhalterung ist von der Antriebsscheibe um eine Garnhalterachse derart drehbar angetrieben, dass das drehbare zweite Klemmelement bei einer Umdrehung der Antriebsscheibe zwei Umdrehungen vollzieht. Ferner schließen die Garnhalterachse und die Knoterachse in Richtung der Antriebsache betrachtet einen Winkel von weniger als 45 ° miteinander ein.

Bei diesem Garnknoter in Form eines Doppelknoter, bei dem bei einer vollen Umdrehung der Antriebsscheibe zwei Knoten geknotet werden, wird ein drehbares zweites Klemmelement der Garnhalterung eingesetzt, welches, im Unterschied zu bekannten Garnknotern, um eine Garnhalterachse drehbar angetrieben ist, die mit der Knoterachse einen Winkel von weniger als 45° einschließt. Die Garnhalterachse ist quer zur Zuführrichtung des Garnstrangpaares ausgerichtet. Bei diese Gestaltung des Garnknoters, bei der das drehbare zweite Klemmelement der Garnhalterung bei einer vollen Umdrehung der Antriebsscheibe zwei volle Umdrehungen vollzieht, zieht das Garnmesser nach der Bildung des zweiten Knotens das Garnstrangpaar aus der Garnhalterung heraus, ohne es zu durchtrennen. Dies wird durch die vollständige Drehung des drehbaren zweiten Klemmelements zu dem Zeitpunkt, zu dem das Garnmesser nach der Bildung des zweiten Knotens an das Garnstrangpaar gelangt, erzielt. Denn dann ist das Garnstrangpaar nicht mehr in der Garnhalterung geklemmt und kann vom Garnmesser aus der Garnhalterung herausgezogen werden.

Ein weiterer Vorteil besteht darin, dass der Knoterhaken für beide Knoten in derselben Richtung drehend angetrieben ist, sodass beide Knoten in derselben Richtung geknotet sind. Vorzugsweise wird ein gedrilltes Garn eingesetzt, dass bei der vorgegebenen Drehrichtung des Knoterhakens gegen die Drillrichtung des Garns leicht aufgedrillt wird. Dadurch, dass kein Garnrest bei der Knotenbildung entsteht, steht beim Abziehen der Schlaufe über den Knoterhaken und damit der Knotenbildung ein längeres Garnende zur Verfügung. Hierdurch können zwei Schlaufenknoten hintereinander geknotet werden, die gegenüber durchgezogenen Knoten eine höhere Festigkeit aufweisen.

Bei dieser Anordnung können in einer beispielhaften Ausführungsform des Garnknoters die Garnhalterachse und die Knoterachse in Richtung der Antriebsache betrachtet einen Winkel von weniger als 40°, insbesondere weniger als 35°, miteinander einschließen.

Ferner können in einer beispielhaften Ausführungsform des Garnknoters die Garnhalterachse und die Knoterachse in Richtung der Antriebsache betrachtet einen Winkel von mehr als 15°, insbesondere mehr als 20°, miteinander einschließen.

Die Garnhalterachse kann die Antriebsachse schneiden oder in einem Abstand, der geringer ist als ein Außendurchmesser der Antriebsscheibe, kreuzen.

Gemäß einer beispielhaften Ausführungsform kann der Garnknoter ferner einen Knotenabzugshebel, zum Abstreifen einer ersten Schlaufe im Garnstrangpaar und Bilden des ersten Knotens nach einer vollen Umdrehung des Knoterhakens, umfassen. Somit kann eine Schlaufe zum Bilden eines Knotens aktiv vom Knoterhaken abgezogen werden, um ein sicheres Bilden eines Knotens zu gewährleisten.

An dem Knotenabzugshebel kann ein Garnmesser zum Durchtrennen des Garnstrangpaares angeordnet sein, sodass während oder nach dem Abziehen der Schlaufe zur Bildung des ersten Knotens das Garnstrangpaar durchtrennt werden kann.

Alternativ kann das Garnmesser auch an dem drehbaren zweiten Klemmelement der Garnhalterung angeordnet sein, sodass das Durchtrennen des Garnstrangpaares unabhängig vom Abziehen der Schlaufe zur Bildung des ersten Knotens erfolgen kann.

Das erste Klemmelement der Garnhalterung kann feststehend ausgebildet sein. Das feststehende erste Klemmelement und das drehbare zweite Klemmelement der Garnhalterung können jeweils eine radial zur Garnhalterachse verlaufende Ausnehmung zum Aufnehmen des Garnstrangpaares aufweisen.

Das erste Klemmelement und das drehbare zweite Klemmelement der Garnhalterung können jeweils einander zugewandte Klemmflächen zum Klemmen des Garnstrangpaares aufweisen. Die in Richtung der Garnhalterachse einander zugewandten Klemmflächen können konusförmig und komplementär zueinander ausgebildet sein. Die einander zugewandten Klemmflächen können auch eben ausgebildet sein, zum Beispiel in einem rechten Winkel zur Garnhalterachse.

Zum Antreiben des zweiten Klemmelements der Garnhalterung kann die Antriebsscheibe zwei Garnhalterverzahnungsabschnitte aufweisen, die sich jeweils teilweise in Umfangsrichtung um die Antriebsachse erstrecken und denselben radialen Abstand zur Antriebsachse aufweisen. Zum Antreiben des Knoterhakens kann die Antriebsscheibe zwei Knoterhakenverzahnungsabschnitte aufweisen, die sich jeweils teilweise in Umfangsrichtung um die Antriebsachse erstrecken und denselben radialen Abstand zur Antriebsachse aufweisen.

Wenn die Antriebsscheibe drehend angetrieben wird, gelangen in entsprechenden Drehwinkelbereichen die Garnhalterverzahnungsabschnitte in Überdeckung mit einem Ritzel des zweiten Klemmelements der Garnhalterung, um mit diesem zu kämmen und dadurch anzutreiben. Auf einem anderen Radius gelangen in entsprechenden Drehwinkelbereichen die Knoterhakenverzahnungsabschnitte in Überdeckung mit einem Ritzel des Knoterhakens, um mit diesem zu kämmen und anzutreiben.

Die Garnhalterverzahnungsabschnitte und die Knoterhakenverzahnungsabschnitte sind in Gruppen von jeweils einem Garnhalterverzahnungsabschnitt und einem Knoterhakenverzahnungsabschnitt zur Bildung jeweils eines der beiden Knoten aufgeteilt. Die Gruppen von Verzahnungsabschnitten sind hierbei in Umfangsrichtung versetzt zueinander angeordnet, sodass das zweite Klemmelement und der Knoterhaken bei einer Umdrehung der Antriebsscheibe jeweils zweimal nacheinander intermittierend angetrieben werden, um zwei Knoten nacheinander zu bilden.

Die Garnhalterverzahnungsabschnitte und die Knoterhakenverzahnungsabschnitte können jeweils in unterschiedlichen Abständen zur Antriebsachse angeordnet sein.

Alternativ kann auch vorgesehen sein, dass jeweils der Garnhalterverzahnungsabschnitt und der Knoterhakenverzahnungsabschnitt einer Gruppe von Verzahnungsabschnitten zur Bildung eines der Knoten durch einen gemeinsamen Verzahnungsabschnitt gebildet sind. Dies bedeutet, dass die Garnhalterverzahnungsabschnitte und die Knoterhakenverzahnungsabschnitte im selben Abstand zur Antriebsachse angeordnet sind. Die beiden Verzahnungsabschnitte dienen demnach jeweils sowohl zum Antreiben des zweiten Klemmelements der Garnhalterung als auch zum Antreiben des Knoterhakens. Die gemeinsamen Verzahnungsabschnitte sind über den Umfang versetzt zueinander angeordnet.

Ferner wird die Aufgabe durch ein Verfahren zur Bildung zweier Knoten in einem Garn mittels eines oben beschriebenen Garnknoters gelöst, wobei das Verfahren folgenden Verfahrensablauf aufweist:
1. Zuführen eines Garnstrangpaares mittels einer Garnzuführeinrichtung über den Knoterhaken zur Garnhalterung,
2. Drehen des Knoterhakens um eine volle Umdrehung zum Bilden einer ersten Schlaufe in das Garnstrangpaar für einen ersten Knoten,
3. Drehen des drehbaren zweiten Klemmelements zum Klemmen des Garnstrangpaares in der Garnhalterung, wobei das Drehen des drehbaren zweiten Klemmelements nach zumindest teilweiser Drehung des Knoterhakens und zumindest teilweisem Bilden der ersten Schlaufe beginnt,
4. Durchtrennen des Garnstrangpaares zwischen dem Knoterhaken und der Garnhalterung nachdem das Garnstrangpaar in der Garnhalterung geklemmt wurde,
5. Abziehen der ersten Schlaufe vom Knoterhaken zum Bilden des ersten Knotens,
6. Zuführen des Garnstrangpaares mittels der Garnzuführeinrichtung von der Garnhalterung über den Knoterhaken,
7. Drehen des Knoterhakens um eine volle Umdrehung zum Bilden einer zweiten Schlaufe in das Garnstrangpaar für einen zweiten Knoten,
8. Drehen des drehbaren zweiten Klemmelements zum Freigeben des Garnstrangpaares aus der Garnhalterung, wobei das Drehen des drehbaren zweiten Klemmelements erste nach zumindest teilweiser Drehung des Knoterhakens und zumindest teilweisem Bilden der ersten Schlaufe beginnt, und
9. Abziehen der zweiten Schlaufe vom Knoterhaken zum Bilden des zweiten Knotens.

Dadurch, dass nach zumindest teilweiser Drehung des Knoterhakens und zumindest teilweisem Bilden der Schlaufe für den zweiten Knoten das in der Garnhalterung geklemmte Garnstrangpaar durch Drehen des drehbaren Klemmelements freigegeben wird, ist sichergestellt, dass das Garnmesser das Garnstrangpaar nicht mehr durchtrennen kann. Vielmehr wird das Garnstrangpaar von dem Garnmesser aus der freigegebenen Garnhalterung heraus gezogen. Somit wird ein Garnrest vermieden.

Das Durchtrennen des Garnstrangpaares nach dem Bilden des zweiten Knotens kann durch Weiterdrehen des drehbaren zweiten Klemmelements erfolgen, wobei das Garnmesser am drehbaren zweiten Klemmelement angeordnet ist und das Garnstrangpaar durchtrennt.

Das Abziehen der ersten Schlaufe zur Bildung des ersten Knotens sowie das Abziehen der zweiten Schlaufe zur Bildung des zweiten Knotens können durch die Bewegung eines Knotenabzugshebels erfolgen.

Das Durchtrennen des Garnstrangpaares kann auch mittels eines Garnmessers am Knotenabzugshebel beim Abziehen der Schlaufe vom Knoterhaken erfolgen. In diesem Fall ist kein Garnmesser am drehbaren zweiten Klemmelement angeordnet. Alternativ kann das Durchtrennen des Garnstrangpaares auch durch ein feststehendes Garnmesser an einem Knoterrahmen erfolgen.

In einer beispielhaften Ausgestaltung des Verfahrens kann vorgesehen sein, dass das erste Klemmelement feststehend ist und ebenso wie das drehbare zweite Klemmelement eine radial zur Garnhalterachse verlaufende Ausnehmung zum Aufnehmen des Garnstrangpaares aufweist. Zum Klemmen des Garnstrangpaares nach zumindest teilweisem Bilden der ersten Schlaufe wird das drehbare zweite Klemmelement bis zu einer Drehposition, in der die Ausnehmung des drehbaren zweiten Klemmelements und die Ausnehmung des ersten Klemmelements in Überdeckung zueinander orientiert sind, gedreht. Anschließend wird das Garnstrangpaar in die Ausnehmungen der beiden Klemmelemente zugeführt und schließlich das drehbare zweite Klemmelement weitergedreht, bis das Garnstrangpaar zwischen den Klemmflächen der Klemmelemente geklemmt ist.

Nach dem Durchtrennen des Garnstrangpaares kann das drehbare zweite Klemmelement weitergedreht werden, bis die Drehposition zu Beginn der Drehung erreicht ist und die Drehung pausiert wird.

Ein Ausführungsbeispiel eines erfindungsgemäßen Garnknoters wird im Folgenden anhand der Figuren näher erläutert. Hierin zeigen
- Figur 1: eine Seitenansicht in Richtung der Achse der Knoterwelle eines auf einer Ballenpresse befestigten Garnknoters zur Bildung zweier Knoten,
- Figur 2: den Garnknoter gemäß Figur 1 mit dem Knoterhaken und der Garnhalterung in einer Ausgangsstellung bei der Zuführung des Garnstrangpaares mittels der Pressennadel,
- Figur 3: den Garnknoter gemäß Figur 1 mit dem Knoterhaken in einer Zwischenstellung und der Garnhalterung in einer Ausgangsstellung nach der Zuführung des Garnstrangpaares,
- Figur 4: den Garnknoter gemäß Figur 1 mit dem Knoterhaken nach einer vollen Umdrehung zur Bildung einer Schlaufe für einen ersten Knoten und der Garnhalterung in einer Zwischenstellung,
- Figur 5: den Garnknoter gemäß Figur 1 nach dem Durchtrennen des Garnstrangpaares zwischen dem Knoterhaken und der Garnhalterung,
- Figur 6: den Garnknoter gemäß Figur 1 mit dem Knoterhaken und der Garnhalte- rung in einer Ausgangsstellung bei der erneuten Zuführung des Garnstrangpaares über den Knoterhaken ausgehend von der Garnhalterung,
- Figur 7: den Garnknoter gemäß Figur 1 kurz vor dem Abziehen des zweiten Knotens,
- Figur 8: eine perspektivische Ansicht der Garnhalterung,
- Figur 9: eine weitere perspektivische Ansicht der Garnhalterung,
- Figur 10: eine Seitenansicht eines mit Garn umreiften Pressballens und
- Figur 11: eine Seitenansicht in Richtung der Achse der Knoterwelle eines auf einer Ballenpresse befestigten Garnknoters zur Bildung zweier Knoten in einer alternativen Ausführungsform.

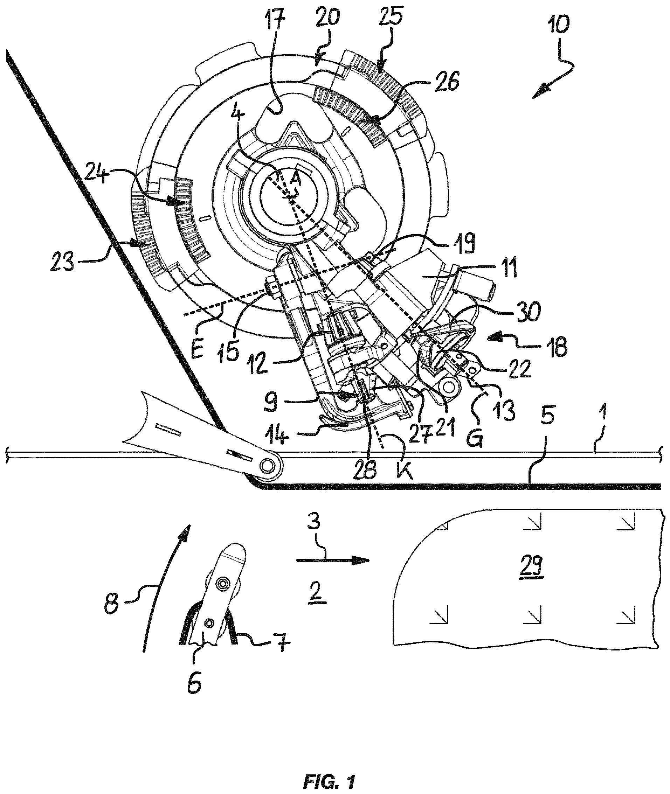

In Figur 1 ist eine obere Wandung 1 eines Pressenkanals 2 wiedergegeben, durch den Pressgut, z.B. Stroh, in Förderrichtung 3 gefördert wird, wobei ein Pressballen 29 aus Pressgut gebildet wird. Oberhalb der oberen Wandung 1 ist eine sich quer über die Breite des Pressenkanals 2 erstreckende Knoterwelle 4 um eine Antriebsachse A drehbar gelagert, auf der, je nach Breite des Pressenkanals 2 mehrere Garnknoter 10 angeordnet sein können. Jedem Garnknoter 10 ist eine in einer vertikalen Längsebene im rechten Winkel zur Antriebsachse A um den Pressballen 29 gelegte Bindegarnschlaufe bzw. -umreifung aus einem ersten Garnstrang 5 und einem zweiten Garnstrang 7 zugeordnet, die in dem Ausführungsbeispiel der Figur 1 durch die Bildung zweier Knoten geschlossen wird, die durch den Garnknoter 10 hergestellt werden. Von der in der Förderrichtung 3 voreilenden Stirnseite (nicht dargestellt) des Pressballens 29, die sich in der in Figur 1 gezeigten Darstellung rechts vom Garnknoter 10 befindet, kommt der über die Oberseite des Pressballens 29 laufende erste Garnstrang 5 des Bindegarns. Der erste Garnstrang 5 wird durch nicht dargestellte, in Figur 1 links vom Garnknoter 10 angeordnete Mittel stramm gehalten. Ein Strangabschnitt wird durch außerhalb des Garnknoters 10 angeordnete Mittel gespannt. Eine Pressennadel 6 einer Garnzuführeinrichtung führt um die rückwärtige Stirnseite des Pressballens 29 von unten einen zweiten Garnstrang 7 des Bindegarns in Richtung des Pfeiles 8 hoch, so dass der zweite Garnstrang 7 im Bereich des Garnknoters 10 mit dem ersten Garnstrang 5 zu einem Garnstrangpaar 5, 7 zusammengebracht und verknotet werden kann.

Der Garnknoter 10 umfasst einen Knoterhaken 9, der in einem Knoterrahmen 11 um eine zur Knoterwelle 4 quer, vorzugsweise radial, gemäß Figur 1 schräg aufwärts, gerichtete Knoterachse K drehbar und über ein Ritzel 12 um diese Knoterachse K angetrieben ist.

Ein Garnmesser 13 ist quer zu den Garnsträngen 5, 7 beweglich angeordnet, um das Garn nach der Knotenbildung abzuschneiden.

Ein Knotenabzugshebel 14 ist um eine Achse E eines Wellenzapfens 15 in einem Lager im Knoterrahmen 11 schwenkbar gelagert ist und dabei durch eine Rolle, die sich in Figur 1 hinter dem Wellenzapfen 15 befindet und daher nicht sichtbar ist, bewegt wird, die in einer Nut 17 einer um die Antriebsachse A drehend angetriebene Antriebsscheibe 20 geführt ist. Der von einem Kreis abweichende Verlauf der Nut 17 bewirkt die Schwenkbewegung des Knotenabzugshebels 14 zum Abziehen eines Knotens vom Knoterhaken 9.

Eine Garnhalterung 18 hält die Garnstränge 5, 7 während bestimmter Arbeitsphasen des Knoterhakens 9 und des Garnmessers 13 in Position. Die Garnhalterung 18 umfasst ein erstes Klemmelement 21 und ein drehbares zweites Klemmelement 22. In dem gezeigten Ausführungsbeispiel ist das erste Klemmelement 21 feststehend gegenüber dem Knoterrahmen 11. Das drehbare zweite Klemmelement 22 ist um eine Garnhalterachse G drehbar. Die Garnhalterachse G und die Knoterachse K schließen, in Richtung der Antriebsache A betrachtet, einen Winkel von etwa 22° miteinander ein. Das drehbare zweite Klemmelement 22 ist mit einem Schaft 39 in einem Lager am Knoterrahmen 11 gelagert. Der Antrieb des drehbaren zweiten Klemmelements 22 erfolgt über ein Ritzel 19.

Bei Doppelknotern gemäß dem gezeigten Ausführungsbeispiel nach Figur 1 werden bei einer Umdrehung der Antriebsscheibe 20 zwei Knoten erzeugt. Hierbei werden die Ritzel 12, 19 durch zwei Gruppen, im gezeigten Ausführungsbeispiel von Paaren, von Verzahnungsabschnitten 23, 24 bzw. 25, 26 angetrieben, die auf der in Figur 1 dem Betrachter zugewandten Flachseite der Antriebsscheibe 20 im Bereich deren äußeren Randes angeordnet sind. Die beiden Verzahnungsabschnitte 24, 26 (Garnhalterverzahnungsabschnitte) zum Antrieben des Garnhalters 18 sind identisch zueinander ausgebildet und haben denselben radialen Abstand zur Antriebsachse A der Antriebsscheibe 20, sodass sie bei der Drehung der Antriebsscheibe 20 nur mit dem Ritzel 19 zum Antreiben des drehbaren zweiten Klemmelements 22 in Eingriff kommen können. Die beiden Verzahnungsabschnitte 23, 25 (Knoterhakenverzahnungsabschnitte) zum Antrieben des Knoterhakens 9 sind ebenfalls identisch zueinander ausgebildet und haben denselben radialen Abstand zur Antriebsachse A der Antriebsscheibe 20, wobei die Verzahnungsabschnitte 23, 25 (Knoterhakenverzahnungsabschnitte) zum Antreiben des Knoterhakens 9 radial weiter außen angeordnet sind, als die Verzahnungsabschnitte 24, 26 (Garnhalterverzahnungsabschnitte) zum Antrieben des Garnhalters 18. Die Verzahnungsabschnitte 24, 26 (Garnhalterverzahnungsabschnitte) zum Antrieben des Garnhalters 18sind derart angeordnet, dass sie nur das Ritzel 12 zum Antreiben des Knoterhakens 9 antreiben.

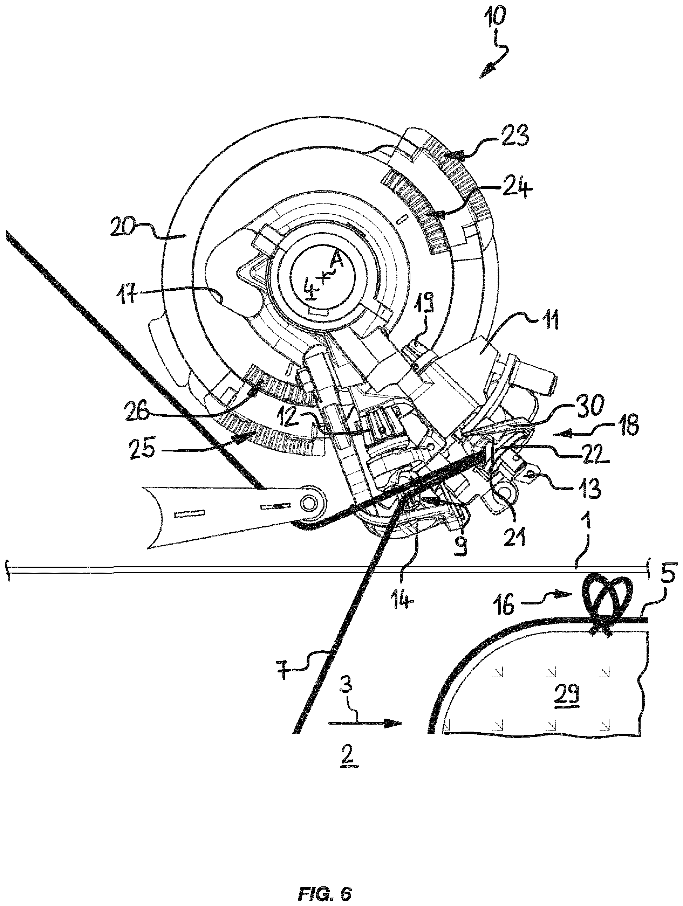

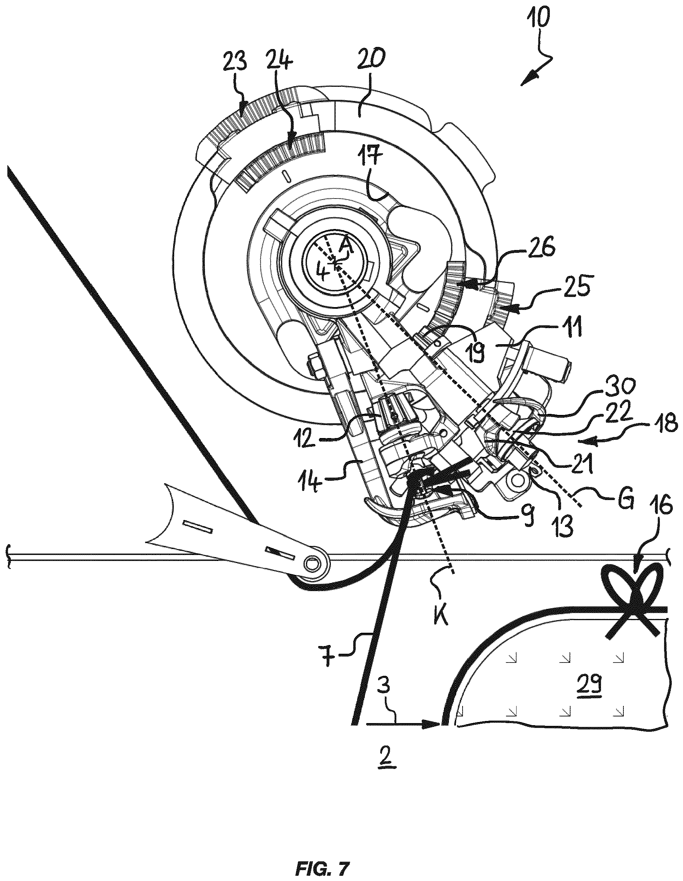

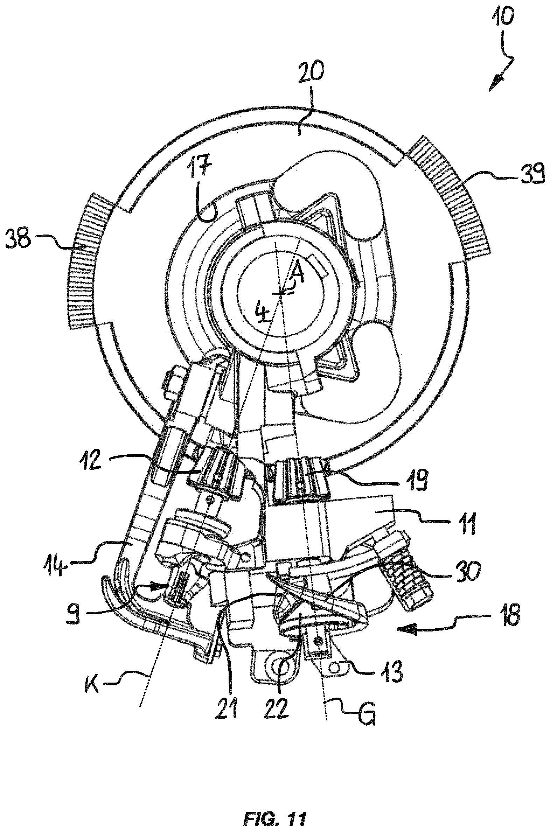

Figur 11 zeigt eine alternative Ausgestaltung der Verzahnungsabschnitte, wobei Bauteile, die mit Bauteilen des Ausführungsbeispiels gemäß der Figuren 1 bis 7 übereinstimmt, mit denselben Bezugszeichen versehen sind. Gemäß der alternativen Ausgestaltung sind die Ritzel 12, 19 durch zwei einzelne Verzahnungsabschnitte 38, 39 angetrieben, die denselben Abstand zur Antriebsachse A aufweisen. Der Garnhalterverzahnungsabschnitt und der Knoterhakenverzahnungsabschnitt jeweils einer Gruppe werden durch einen einzelnen gemeinsamen Verzahnungsabschnitt 38, 39 gebildet. In anderen Worten ausgedrückt, ersetzt jeder einzelne gemeinsame Verzahnungsabschnitt somit eine Gruppe von Verzahnungsabschnitten 24, 25, 26, 27 gemäß der in den Figuren 1 bis 7 dargestellten Ausführungsform. Jeder einzelne Verzahnungsabschnitt kämmt hierbei sowohl mit dem Ritzel 19 zum Antreiben des drehbaren zweiten Klemmelements 22 als auch mit dem Ritzel 12 zum Antreiben des Knoterhakens 9. Dies ist insbesondere möglich, da, wie nachfolgend noch näher erläutert wird, bei der Bildung eines Knotens als erstes der Knoterhaken 9 beginnt zu drehen und daraufhin das drehbare zweite Klemmelement 22 beginnt zu drehen. Das Ritzel 19 zum Antreiben des drehbaren zweiten Klemmelements 22 und das Ritzel 12 zum Antreiben des Knoterhakens 9 sind in demselben Abstand zur Antriebsachse A angeordnet.

Der in Figur 1 dargestellte Garnknoter 10 stellt bei einer Umdrehung der Antriebsscheibe 20 hintereinander zwei Knoten her. Ein erster Knoten verbindet den hinter an der rückwärtigen Stirnseite des Pressballens 29 hochkommenden unterer zweiten Garnstrang 7 mit dem oberen ersten Garnstrang 5, wodurch eine geschlossene Bindegarnschlaufe gebildet wird, die den Pressballen 29 umschlingt. Ein zweiter Knoten verbindet den an der vorderen Stirnseite des nachfolgenden Pressballens hochkommenden Garnstrang mit dem auf der Oberseite des nachfolgenden Pressballens laufenden Garnstrang, wodurch eine neue Bindegarnschlaufe für den neu zu bildenden Pressballen gebildet wird, in den der Pressballen eingepresst wird. Zwischen den Knoten wird das Bindegarn abgetrennt, so dass die aufeinanderfolgenden Pressballen voneinander getrennt sind.

Der Knoterhaken weist ein Knotermaul auf, das durch einen Hakenteil 27 und eine Knoterzunge 28 gebildet ist. Die Knoterzunge 28 bildet einen um eine Schwenkachse schwenkbar gelagerten zweiarmigen Hebel dessen einer Arm (Zungenteil) mit dem Hakenteil 27 des Knoterhakens 9 unter Bildung des Knotermauls zusammenwirkt und an dessen anderem Arm eine (hier nicht dargestellte) Zungenrolle drehbar gelagert ist.

Das Öffnen des Knotermauls wird dadurch bewerkstelligt, dass bei der Drehung des Knoterhakens 9 die Zungenrolle über eine (hier nicht dargestellte) Nockenfläche läuft, wodurch die Zungenrolle angehoben und das Zungenteil vom Hakenteil 27 angehoben wird.

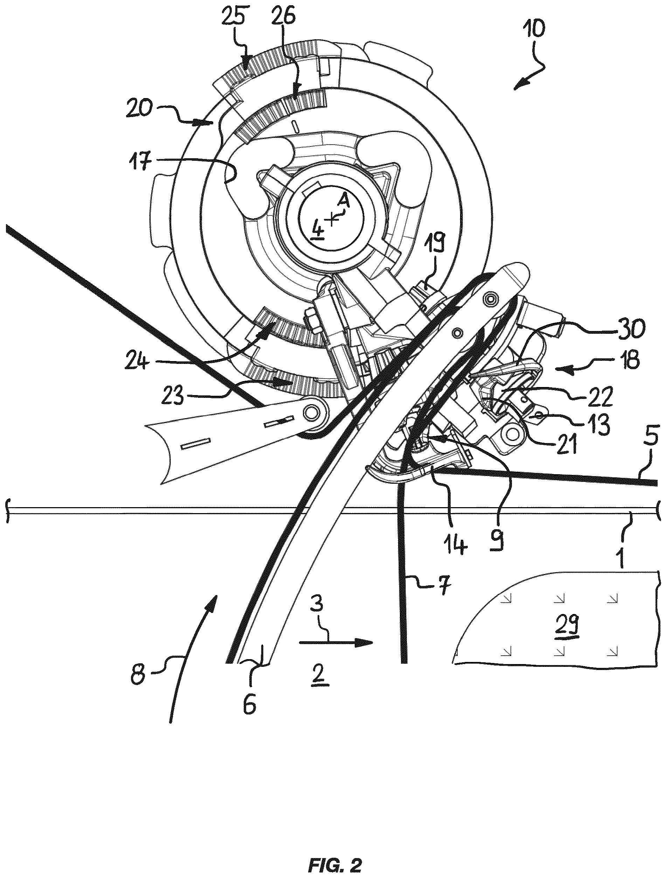

Die Figuren 2 bis 7 verdeutlichen den Ablauf zur Bildung zweier Knoten 16, 33 in einem Garn mittels des Garnknoters 10 gemäß Figur 1.

Zunächst wird ein Garnstrangpaar, bestehend aus dem ersten Garnstrang 5 und dem zweiten Garnstrang 7, mittels einer Pressennadel 6 einer Garnzuführeinrichtung über den Hakenteil 27 und über die Knoterzunge 28 des Knoterhaken 9 in Richtung zur Garnhalterung 18 gelegt, wie dies insbesondere aus Figur 2 ersichtlich ist. In der in Figur 2 dargestellten Stellung befindet sich der Knoterhaken 9 in einer Ausgangsstellung, in der der Hakenteil 27 des Knoterhakens 9 zumindest in etwa parallel zur Antriebsachse A der Knoterwelle 4 angeordnet ist. Ferner befindet sich die Garnhalterung 18, insbesondere das drehbare zweite Klemmelement 22 gegenüber dem feststehenden ersten Klemmelements 21 in einer Ausgangsstellung

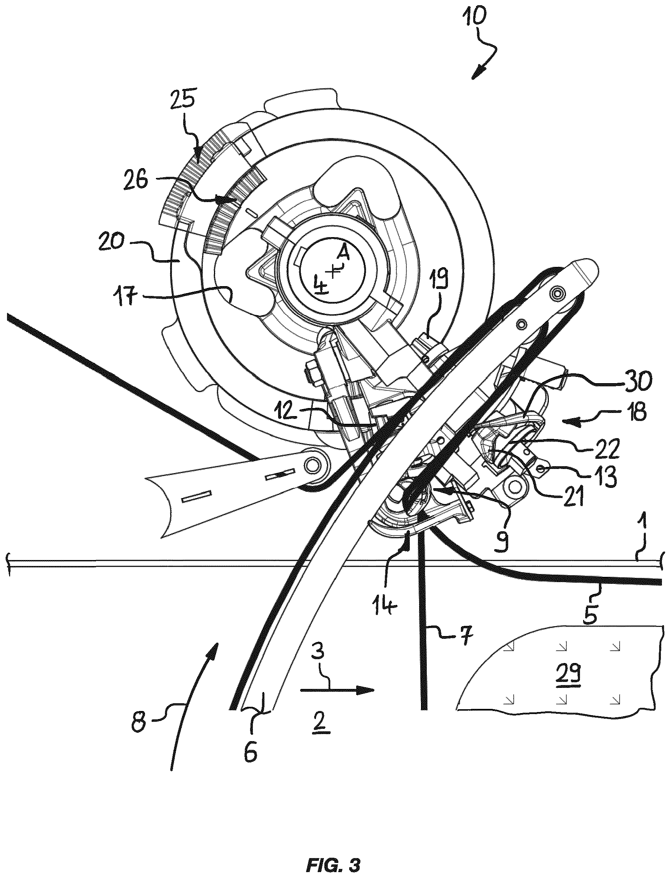

Daraufhin wird der Knoterhaken um die Knoterachse K in eine Richtung gedreht, bei der sich der Hakenteil 27 des Knoterhakens 9 zunächst von der Garnhalterung 18 weg bewegt, wobei eine erste Schlaufe zur Bildung eines ersten Knotens 16 in das Garnstrangpaar 5, 7 um den Knoterhaken 9 gebildet wird, wie dies in Figur 3 ersichtlich ist. Das von der Pressennadel 6 zugeführte Garnstrangpaar 5, 7 befindet sich hierbei bereits im Fangbereich eines Fangarms 30 der Garnhalterung, der an dem drehbaren zweiten Klemmelement 22 befestigt ist und in Umfangsrichtung um die Garnhalterachse G einen umlaufenden Fangbereich bildet, in den das Garnstrangpaar 5, 7 aufgenommen werden kann.

Daraufhin wird begonnen, das drehbare zweite Klemmelement 22 relativ zum feststehenden ersten Klemmelement 21 um die Garnhalterachse G zu drehen. Hierdurch wird das Garnstrangpaar 5, 7 im Bereich zwischen dem Fangarm 30 und dem drehenden zweiten Klemmelement 22 gehalten und in radiale Ausnehmungen 31, 32 am feststehenden ersten Klemmelement 21 und am drehbaren zweiten Klemmelement 22 eingeführt. Durch weiteres Drehen des drehbaren zweiten Klemmelements 22 wird das Garnstrangpaar 5, 7 dann zwischen zwei einander zugewandten Klemmflächen 34, 35 an dem feststehenden ersten Klemmelement 21 und dem drehbaren zweiten Klemmelement 22 eingeklemmt.

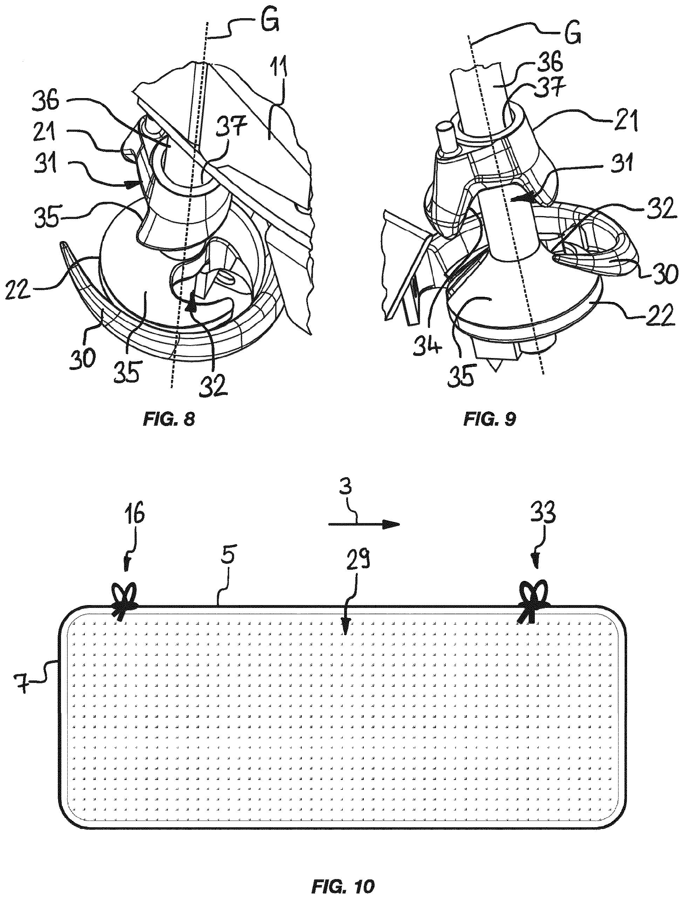

Die radialen Ausnehmungen 31, 32 sind insbesondere in den Figuren 8 und 9 zu erkennen. Die Figuren 8 und 9 zeigen die Garnhalterung 18 in einer perspektivischen Ansicht, wobei das feststehende erste Klemmelement 21 und das drehbare zweite Klemmelement 22 teilweise entlang der Garnhalterachse G auseinandergezogen dargestellt sind. Hierbei ist erkennbar, dass das drehbare zweite Klemmelement 22 einen Schaft 36 aufweist, mit dem das zweite Klemmelement 22 in einer Lagerbohrung 37 des ersten Klemmelements 21 und in einer hier nicht dargestellten Lagerbohrung des Knoterrahmens 11 um die Garnhalterachse G drehbar gelagert ist.

Im gezeigten Ausführungsbeispiel sind die Klemmflächen konusförmig gestaltet. In einer anderen denkbaren Ausführung können die Klemmflächen auch anders gestaltet sein, zum Beispiel als ebene Flächen senkrecht zur Garnhalterachse G.

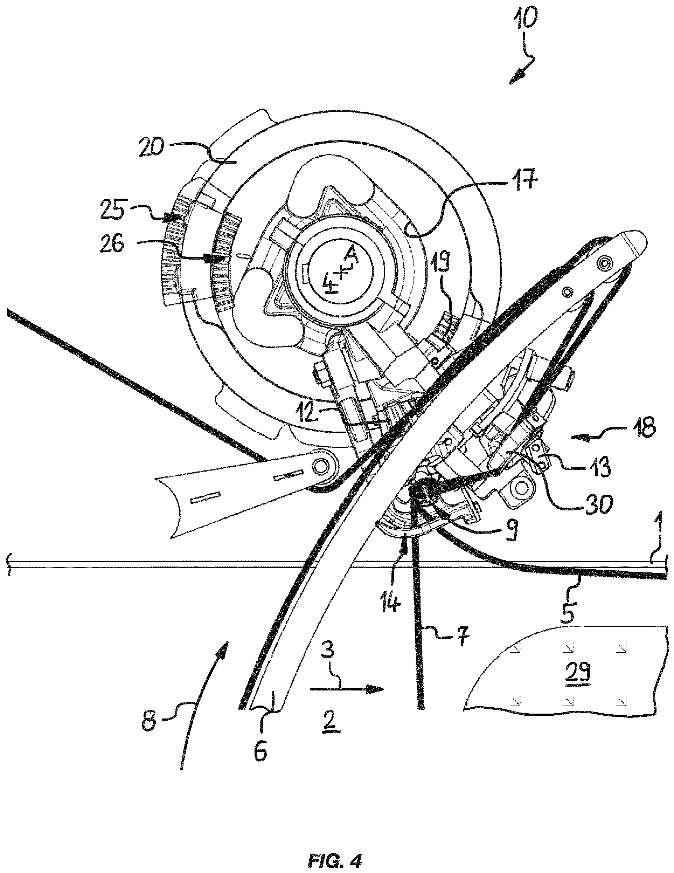

Zu diesem Zeitpunkt ist der Knoterhaken 9 wieder in seiner Ausgangsstellung zurückgedreht worden, wie dies in Figur 4 zu sehen ist. Zwischenzeitlich wurde die Knoterzunge 28 kurzzeitig vom Hakenteil 27 angehoben, sodass der zwischen dem Knoterhaken 9 und der Garnhalterung 18 befindliche Abschnitt des Garnstrangpaares 5, 7 in das Knotermaul aufgenommen wurde, wobei der Begriff Knotermaul den Bereich zwischen dem Hakenteil 27 und der geöffneten bzw. gegenüber dem Hakenteil 27 angehobenen Knoterzunge 28 bezeichnet. In Figur 4 ist die Knoterzunge 28 wieder in ihrer geschlossenen Stellung gegenüber dem Hakenteil 27 dargestellt, in der das Garnstrangpaar 5, 7 am Knoterhaken 9 geklemmt ist.

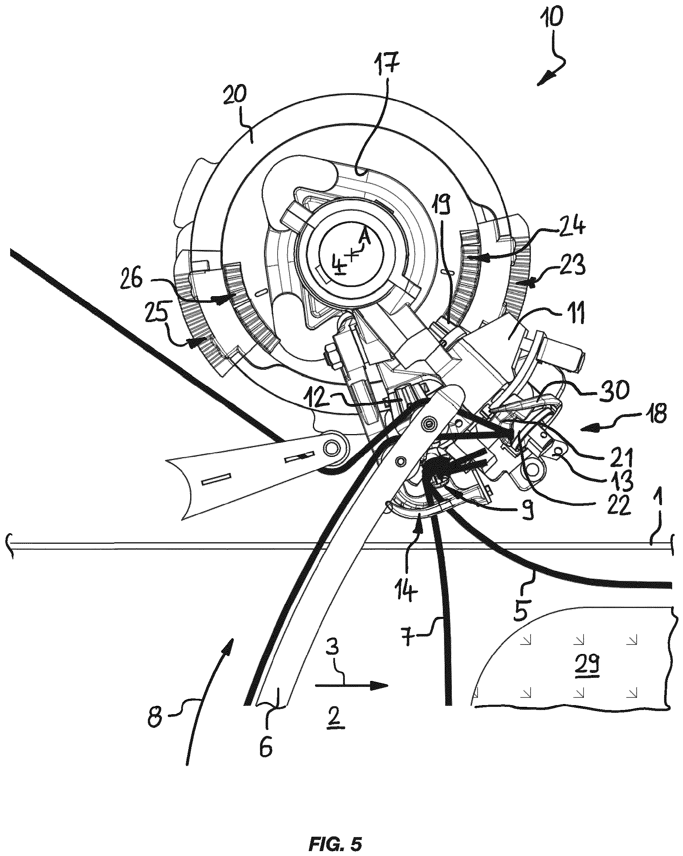

Der Knoterhaken 9 verbleibt zunächst in dieser Ausgangsstellung, wobei das drehbare zweite Klemmelement 22 der Garnhalterung 18 weitergedreht wird, sodass das an dem drehbaren zweiten Klemmelement 22 befestigte Garnmesser 13 durch die Drehung des drehbaren zweiten Klemmelements 22 das Garnstrangpaar 5, 7 zwischen dem Knoterhaken 9 und der Garnhalterung 18 durchtrennt, wie dies in Figur 5 gezeigt ist. In dieser Stellung befindet sich das drehbare zweite Klemmelement 22 wieder in seiner Ausgangsstellung, wobei ein erster Abschnitt des Garnstrangpaares 5, 7 am Knoterhaken 9 geklemmt ist und ein zweiter Abschnitt des Garnstrangpaares 5, 7 in der Garnhalterung 18 geklemmt ist.

Die Pressennadel 6 bewegt sich nun zurück in seiner Ausgangsstellung vom Garnknoter 10 weg, wobei der von der Pressennadel 6 geführte Abschnitt des Garnstrangpaares 5, 7 in der Garnhalterung 18 geklemmt bleibt.

Im Folgenden wird der Knotenabzugshebel 14 in der Richtung verschwenkt, in der der Hakenabschnitt 27 des Knoterhakens 9 ausgerichtet ist und zieht hierbei die Schlaufe auf dem Knoterhaken 9 über den von der Knoterzunge 28 geklemmten Abschnitt des Garnstrangpaares 5, 7 und bildet hierdurch einen ersten Knoten 16.

Durch die weitere Bewegung der Pressennadel 6 wird der in der Garnhalterung 18 geklemmte Abschnitt des Garnstrangpaares 5, 7 über den Hakenabschnitt 27 und die Knoterzunge 28 des Knoterhakens 9 gelegt. Der Knotenabzugshebel 14 wird wieder zurück in seine ursprüngliche Stellung bewegt.

Daraufhin wird wie zur Bildung des ersten Knotens 16 der Knoterhaken 9 gedreht, um eine zweite Schlaufe in dem Garnstrangpaar 5, 7 zu bilden. Nach teilweiser Drehung des Knoterhakens 9 und zumindest teilweisem Bilden der zweiten Schlaufe, wird das drehbare zweite Klemmelement 22 der Garnhalterung 18 erneut gedreht bis das zwischen dem Hakenteil 27 und der Knoterzunge 28 geklemmte Garnstrangpaar 5, 7 wieder freigegeben ist. Dies geschieht dadurch, dass sich das bisher in der Garnhalterung 18 geklemmte Ende des Garnstrangpaares 5, 7 in den radialen Ausnehmungen 31, 32 der Klemmelemente 21, 22 befindet. Hierdurch ist gewährleistet, dass bei weiterer Drehung des drehbaren zweiten Klemmelements 22 das daran befestigte Garnmesser 13 das Garnstrangpaar 5, 7 nicht mehr schneiden kann, sondern aus der Garnhalterung 18, ohne zu schneiden, heraus gedrückt. Im Anschluss daran bewegt sich wieder der Knotenabzugshebel 14 in Richtung des Hakenteils 27 zum Abziehen des zweiten Knotens 33.

Figur 10 zeigt schematisch eine Seitenansicht eines Pressballens 29, der vollständig von Garnsträngen 5, 7 umreift ist. Während eines Knotvorgangs bzw. eines vollständigen Arbeitsgangs des Garnknoters wird zunächst ein erster Knoten 16 geknotet, der die Umreifung des Pressballens 29 abschließt. Daraufhin wird im selben Arbeitsgang ein zweiter Knoten 33 geknotet, um eine Schlaufe zu bilden, in die ein weiterer Pressballen eingepresst werden kann.

### Bezugszeichenliste

- 1: Wandung
- 2: Pressenkanal
- 3: Förderrichtung
- 4: Knoterwelle
- 5: erster Garnstrang
- 6: Pressennadel
- 7: zweiter Garnstrang
- 8: Pfeil
- 9: Knoterhaken
- 10: Garnknoter
- 11: Knoterrahmen
- 12: Ritzel
- 13: Garnmesser
- 14: Knotenabzugshebel
- 15: Wellenzapfen
- 16: erster Knoten
- 17: Nut
- 18: Garnhalterung
- 19: Ritzel
- 20: Antriebsscheibe
- 21: erstes Klemmelement
- 22: zweites Klemmelement
- 23: Verzahnungsabschnitt
- 24: Verzahnungsabschnitt
- 25: Verzahnungsabschnitt
- 26: Verzahnungsabschnitt
- 27: Hakenteil
- 28: Knoterzunge
- 29: Pressballen
- 30: Fangarm
- 31: Ausnehmung
- 32: Ausnehmung
- 33: zweiter Knoten
- 34: Klemmfläche
- 35: Klemmfläche
- 36: Schaft
- 37: Lagerbohrung
- 38: gemeinsamer Verzahnungsabschnitt
- 39: gemeinsamer Verzahnungsabschnitt

- A: Antriebsachse
- E: Achse
- G: Garnhalterachse
- K: Knoterachse

## Patentansprüche

1. Garnknoter (10) zur Bildung zweier Knoten (16, 33) in einem Garnstrangpaar umfassend:
eine um eine Antriebsachse (A) intermittierend drehbar angetriebene Antriebsscheibe (20),
einen von der Antriebsscheibe (20) um eine Knoterachse (K) drehbar angetriebenen Knoterhaken (9) zur Bildung von zwei aufeinanderfolgenden Knoten (16, 33) in dem Garnstrangpaar (5, 7) durch zwei vollständige Umdrehungen des Knoterhakens (9) bei einer Umdrehung der Antriebsscheibe (20),
eine Garnhalterung (18) zum Klemmen des Garnstrangpaares (5, 7) zwischen einem ersten Klemmelement (21) und einem von der Antriebsscheibe (20) drehbar angetriebenen zweiten Klemmelement (22) der Garnhalterung (18), und
ein Garnmesser (13) zum Durchtrennen des Garnstrangpaares (5, 7),
**dadurch gekennzeichnet,**
**dass** das drehbare zweite Klemmelement (22) der Garnhalterung (18) von der Antriebsscheibe (20) um eine Garnhalterachse (G) derart drehbar angetrieben ist, dass das drehbare zweite Klemmelement (22) bei einer Umdrehung der Antriebsscheibe (20) zwei Umdrehungen vollzieht, und
**dass** die Garnhalterachse (G) und die Knoterachse (K) in Richtung der Antriebsache (A) betrachtet einen Winkel von weniger als 45° miteinander einschließen.

2. Garnknoter nach Anspruch 1,
**dadurch gekennzeichnet,**
**dass** die Garnhalterachse (G) und die Knoterachse (K) in Richtung der Antriebsache (A) betrachtet einen Winkel von weniger als 40°, insbesondere weniger als 35°, miteinander einschließen.

3. Garnknoter nach Anspruch 1 oder 2,
**dadurch gekennzeichnet,**
**dass** die Garnhalterachse (G) und die Knoterachse (K) in Richtung der Antriebsache (A) betrachtet einen Winkel von mehr als 15°, insbesondere mehr als 20°, miteinander einschließen.

4. Garnknoter nach einem der Ansprüche 1 bis 3,
**dadurch gekennzeichnet,**
**dass** die Garnhalterachse (G) die Antriebsachse (A) schneidet oder in einem Abstand kreuzt, der geringer ist als ein größter Außendurchmesser der Antriebsscheibe (20).

5. Garnknoter nach einem der Ansprüche 1 bis 4,
**dadurch gekennzeichnet,**
**dass** der Garnknoter ferner einen Knotenabzugshebel (14) umfasst, zum Abstreifen einer Schlaufe im Garnstrangpaar (5, 7) und Bilden eines Knotens (16, 33) nach einer vollen Umdrehung des Knoterhakens (9).

6. Garnknoter nach Anspruch 5,
**dadurch gekennzeichnet,**
**dass** an dem Knotenabzugshebel (14) ein Garnmesser (13) zum Durchtrennen des Garnstrangpaares (5, 7) angeordnet ist.

7. Garnknoter nach einem der Ansprüche 1 bis 5,
**dadurch gekennzeichnet,**
**dass** an dem drehbaren zweiten Klemmelement (22) der Garnhalterung (18) ein Garnmesser (13) zum Durchtrennen des Garnstrangpaares (5, 7) angeordnet ist.

8. Garnknoter nach einem der Ansprüche 1 bis 7,
**dadurch gekennzeichnet,**
**dass** das erste Klemmelement (21) feststehend ist und
**dass** das feststehende erste Klemmelement (21) und das drehbare zweite Klemmelement (22) der Garnhalterung (18) jeweils eine radial zur Garnhalterachse (G) verlaufende Ausnehmung (31, 32) zum Aufnehmen des Garnstrangpaares (5, 7) aufweisen.

9. Garnknoter nach einem der Ansprüche 1 bis 8,
**dadurch gekennzeichnet,**
**dass** das erste Klemmelement (21) und das drehbare zweite Klemmelement (22) der Garnhalterung (18) jeweils einander zugewandte Klemmflächen (34, 35) zum Klemmen des Garnstrangpaares (5, 7) aufweisen und
**dass** die einander zugewandten Klemmflächen (34, 35) konusförmig und komplementär zueinander ausgebildet sind.

10. Garnknoter nach einem der Ansprüche 1 bis 9,
**dadurch gekennzeichnet,**
**dass** die Antriebsscheibe (20) zwei Verzahnungsabschnitte (38, 39) jeweils zum Antreiben des zweiten Klemmelements (22) der Garnhalterung (18) und zum Antreiben des Knoterhakens (9) aufweist, die sich jeweils teilweise in Umfangsrichtung um die Antriebsachse (A) erstrecken.

11. Verfahren zur Bildung zweier Knoten (16, 33) in einem Garn mittels eines Garnknoters (10) nach Anspruch 1, wobei das Verfahren folgenden Verfahrensablauf aufweist:
1. Zuführen eines Garnstrangpaares (5, 7) mittels einer Garnzuführeinrichtung (6) über den Knoterhaken (9) zur Garnhalterung,
2. Drehen des Knoterhakens (9) um eine volle Umdrehung zum Bilden einer ersten Schlaufe in das Garnstrangpaar (5, 7) für einen ersten Knoten (16),
3. Drehen des drehbaren zweiten Klemmelements (22) zum Klemmen des Garnstrangpaares (5, 7) in der Garnhalterung (18), wobei das Drehen des drehbaren zweiten Klemmelements (22) nach zumindest teilweiser Drehung des Knoterhakens (9) und zumindest teilweisem Bilden der ersten Schlaufe beginnt,
4. Durchtrennen des Garnstrangpaares (5, 7) zwischen dem Knoterhaken (9) und der Garnhalterung (18) nachdem das Garnstrangpaar (5, 7) in der Garnhalterung geklemmt wurde,
5. Abziehen der ersten Schlaufe vom Knoterhaken (9) zum Bilden des ersten Knotens (16),
6. Zuführen des Garnstrangpaares (5, 7) mittels der Garnzuführeinrichtung (6) von der Garnhalterung über den Knoterhaken (9),
7. Drehen des Knoterhakens (9) um eine volle Umdrehung zum Bilden einer zweiten Schlaufe in das Garnstrangpaar (5, 7) für einen zweiten Knoten (33),
8. Drehen des drehbaren zweiten Klemmelements (22) zum Freigeben des Garnstrangpaares (5, 7) aus der Garnhalterung (18), wobei das Drehen des drehbaren zweiten Klemmelements (22) erste nach zumindest teilweiser Drehung des Knoterhakens (9) und zumindest teilweisem Bilden der ersten Schlaufe beginnt, und
9. Abziehen der zweiten Schlaufe vom Knoterhaken (9) zum Bilden des zweiten Knotens (33).

12. Verfahren nach Anspruch 11,
**dadurch gekennzeichnet,**
**dass** das Durchtrennen des Garnstrangpaares (5, 7) durch Weiterdrehen des drehbaren zweiten Klemmelements (22) mit einem am drehbaren zweiten Klemmelements (22) befestigten Garnmesser (13) erfolgt.

13. Verfahren nach Anspruch 11 oder 12,
**dadurch gekennzeichnet,**
**dass** das Abziehen einer Schlaufe zur Bildung eines der Knoten (16, 33) durch einen Knotenabzugshebel (14) erfolgt.

14. Verfahren nach Anspruch 13,
**dadurch gekennzeichnet,**
**dass** das Durchtrennen des Garnstrangpaares (13) mittels eines Garnmessers am Knotenabzugshebel (14) beim Abziehen einer Schlaufe vom Knoterhaken (9) zum Bilden eines der Knoten (16, 33) erfolgt.

15. Verfahren nach einem der Ansprüche 11 bis 14,
**dadurch gekennzeichnet,**
**dass** das erste Klemmelement (21) feststehend ist und
**dass** das feststehende erste Klemmelement (21) und das drehbare zweite Klemmelement (22) der Garnhalterung (18) jeweils eine radial zur Garnhalterachse (G) verlaufende Ausnehmung (31, 32) zum Aufnehmen des Garnstrangpaares (5, 7) aufweisen,
**dass** zum Klemmen des Garnstrangpaares (5, 7) nach zumindest teilweisem Bilden der ersten Schlaufe das drehbare zweite Klemmelement (22) bis zu einer Drehposition, in der die Ausnehmung des drehbaren zweiten Klemmelements (22) und die Ausnehmung des feststehenden ersten Klemmelements (21) in Überdeckung zueinander orientiert sind, gedreht wird,
**dass** anschließend das Garnstrangpaar (5, 7) in die Ausnehmungen der beiden Klemmelemente (21, 22) zugeführt wird und
**dass** schließlich das drehbare zweite Klemmelement (22) weitergedreht wird, bis das Garnstrangpaar (5, 7) zwischen den Klemmflächen (34, 35) der beiden Klemmelemente (21, 22) geklemmt ist.

16. Verfahren nach einem der Ansprüche 11 bis 15,
**dadurch gekennzeichnet,**
**dass** nach dem Durchtrennen des Garnstrangpaar (5, 7) das drehbare zweite Klemmelement (22) weitergedreht wird, bis die Drehposition zu Beginn der Drehung erreicht ist und die Drehung pausiert wird.

## Claims

1. Twine knotter (10) for forming two knots (16, 33) in a pair of twine strands comprising:
a drive pulley (20) driven intermittently rotatably about a drive axis (A),
a bill hook (9) rotatably driven by the drive pulley (20) about a knotter axis (K) to form two successive knots (16, 33) in the pair of twine strands (5, 7) by two complete rotations of the bill hook (9) in one rotation of the drive pulley (20),
a twine holding device (18) for clamping the pair of twine strands (5, 7) between a first clamping element (21) and a second clamping element (22) of the twine holding device (18), the second clamping element being rotatably driven by the drive pulley (20), and
a twine knife (13) for cutting the pair of twine strands (5, 7),
**characterized in**
**that** the rotatable second clamping element (22) of the twine holding device (18) is driven rotatably about a twine holder axis (G) by the drive pulley (20) in such a way that the rotatable second clamping element (22) completes two rotations for one rotation of the drive pulley (20), and
**that** the twine holder axis (G) and the knotter axis (K), viewed in the direction of the drive axis (A), enclose an angle of less than 45° with one another.

2. Twine knotter according to claim 1,
**characterized in**
**that** the twine holder axis (G) and the knotter axis (K), viewed in the direction of the drive axis (A), enclose an angle of less than 40°, in particular less than 35°, with one another.

3. Twine knotter according to claim 1 or 2,
**characterized in**
**that** the twine holder axis (G) and the knotter axis (K), viewed in the direction of the drive axis (A), enclose an angle of more than 15°, in particular more than 20°, with one another.

4. Twine knotter according to one of claims 1 to 3,
**characterized in**
**that** the twine holder axis (G) intersects the drive axis (A) or crosses the drive axis at a distance, which is less than a largest outer diameter of the drive pulley (20).

5. Twine knotter according to one of claims 1 to 4,
**characterized in**
**that** the twine knotter further comprises a knot pull-off arm (14) for pulling off a loop in the pair of twine strands (5, 7) and forming a knot (16, 33) after one full rotation of the bill hook (9).

6. Twine knotter according to claim 5,
**characterized in**
**that** a twine knife (13) for severing the pair of twine strands (5, 7) is arranged on the knot pull-off arm (14).

7. Twine knotter according to one of claims 1 to 5,
**characterized in**
**that** a twine knife (13) for severing the pair of twine strands (5, 7) is arranged on the rotatable second clamping element (22) of the twine holding device (18).

8. Twine knotter according to one of claims 1 to 7,
**characterized in**
**that** the first clamping element (21) is stationary and
**that** the stationary first clamping element (21) and the rotatable second clamping element (22) of the twine holding device (18) each have a recess (31, 32), running radially with respect to the twine holder axis (G), for receiving the pair of twine strands (5, 7).

9. Twine knotter according to one of claims 1 to 8,
**characterized in**
**that** the first clamping element (21) and the rotatable second clamping element (22) of the twine holding device (18) each have mutually facing clamping surfaces (34, 35) for clamping the pair of twine strands (5, 7), and
**that** the clamping surfaces (34, 35) facing each other are conical and complementary to each other.

10. Twine knotter according to one of claims 1 to 9,
**characterized in**
**that** the drive pulley (20) has two toothing sections (38, 39) for driving the second clamping element (22) of the twine holding device (18) and for driving the bill hook (9), respectively, which each extend partially in the circumferential direction about the drive axis (A).

11. Method of forming two knots (16, 33) in a twine by means of a twine knotter (10) according to claim 1, the method comprising the following sequence of method steps:
1. Feeding a pair of twine strands (5, 7) by means of a twine feeding device (6) over the bill hook (9) to the twine holding device,
2. Rotating the bill hook (9) one full turn to form a first loop in the pair of twine strands (5, 7) for a first knot (16),
3. Rotating said rotatable second clamping element (22) for clamping said pair of twine strands (5, 7) in said twine holding device (18), wherein said rotating of said rotatable second clamping element (22) starts after at least partial rotation of said bill hook (9) and at least partial formation of said first loop,
4. Cutting the pair of twine strands (5, 7) between the bill hook (9) and the twine holding device (18) after the pair of twine strands (5, 7) has been clamped in the twine holding device,
5. Pulling the first loop off the bill hook (9) to form the first knot (16),
6. Feeding the pair of twine strands (5, 7) by means of the twine feeding device (6) from the twine holding device over the bill hook (9),
7. Rotating the bill hook (9) one full turn to form a second loop in the pair of twine strands (5, 7) for a second knot (33),
8. Rotating said rotatable second clamping element (22) to release said pair of twine strands (5, 7) from said twine holding device (18), said rotating of said rotatable second clamping element (22) starts after at least partial rotation of said bill hook (9) and at least partial formation of said first loop, and
9. Pulling the second loop off the bill hook (9) to form the second knot (33).

12. Method according to claim 11,
**characterized in**
**that** the severing of the pair of twine strands (5, 7) is effected by further twisting of the rotatable second clamping element (22) with a twine knife (13) attached to the rotatable second clamping element (22).

13. Method according to claim 11 or 12,
**characterized in**
**that** the pulling off of a loop for forming one of the knots (16, 33) is effected by a knot pull-off arm (14).

14. Method according to claim 13,
**characterized in**
**that** the severing of the pair of twine strands (13) is effected by means of a twine knife on the knot pull-off arm (14) when a loop is pulled off the bill hook (9) to form one of the knots (16, 33).

15. Method according to any one of claims 11 to 14,
**characterized in**
**that** the first clamping element (21) is stationary and
**that** the stationary first clamping element (21) and the rotatable second clamping element (22) of the twine holding device (18) each have a recess (31, 32), running radially with respect to the twine holder axis (G), for receiving the pair of twine strands (5, 7),
**that**, in order to clamp the pair of twine strands (5, 7) after at least partial formation of the first loop, the rotatable second clamping element (22) is rotated to a rotational position in which the recess of the rotatable second clamping element (22) and the recess of the stationary first clamping element (21) are oriented in overlapping relationship with one another,
**that** the pair of twine strands (5, 7) is then fed into the recesses of the two clamping elements (21, 22), and
**that** finally the rotatable second clamping element (22) is rotated further until the pair of twine strands (5, 7) is clamped between the clamping surfaces (34, 35) of the two clamping elements (21, 22).

16. Method according to any one of claims 11 to 15,
**characterized in**
**that**, after the pair of twine strands (5, 7) has been severed, the rotatable second clamping element (22) continues to be rotated until the rotational position at the start of rotation is reached and the rotation is paused.

## Revendications

1. Noueur de fil (10) pour former deux nœuds (16, 33) dans une paire de brins de fil comprenant :
un disque d'entraînement (20) entraîné en rotation par intermittence autour d'un axe d'entraînement (A),
un crochet de noueur (9) entraîné en rotation autour d'un axe de noueur (K) par le disque d'entraînement (20) pour former deux nœuds successifs (16, 33) dans la paire de brins de fil (5, 7) par deux tours complets du crochet de noueur (9) lors d'un tour du disque d'entraînement (20),
un support de fil (18) pour serrer la paire de brins de fil (5, 7) entre un premier élément de serrage (21) et un deuxième élément de serrage (22) du support de fil (18) entraîné en rotation par le disque d'entraînement (20),
et
un couteau de fil (13) pour séparer la paire de brins de fil (5, 7) ,
**caractérisé en ce que**
le deuxième élément de serrage rotatif (22) du support de fil (18) rotatif est entraîné en rotation par le disque d'entraînement autour d'un axe de support de fil (G) de telle manière que le deuxième élément de serrage rotatif (22) accomplit deux tours lors d'un tour du disque d'entraînement (20), et
**en ce que** l'axe de support de fil (G) et l'axe de noueur (K), considérés en direction de l'axe d'entraînement (A), forment entre eux un angle de moins de 45°.

2. Noueur de fil selon la revendication 1,
**caractérisé en ce que**
l'axe de support de fil (G) et l'axe de noueur (K), considérés en direction de l'axe d'entraînement (A), forment entre eux un angle de moins de 40°, en particulier de moins de 35°.

3. Noueur de fil selon la revendication 1 ou 2,
**caractérisé en ce que**
l'axe de support de fil (G) et l'axe de noueur (K), considérés en direction de l'axe d'entraînement (A), forment entre eux un angle de plus de 15°, en particulier de plus de 20°.

4. Noueur de fil selon l'une quelconque des revendications 1 à 3,
**caractérisé en ce que**
l'axe de support de fil (G) coupe l'axe d'entraînement (A) ou se croisent à une distance qui est plus faible qu'un diamètre extérieur maximal du disque d'entraînement (20).

5. Noueur de fil selon l'une quelconque des revendications 1 à 4,
**caractérisé en ce que**
le noueur de fil comprend en plus un levier de tirage de nœud (14) pour dérouler une boucle dans la paire de brins de fil (5, 7) et former un nœud (16, 33) après un tour complet du crochet de noueur (9).

6. Noueur de fil selon la revendication 5,
**caractérisé en ce qu'**
un couteau de fil (13) est disposé sur le levier de tirage de nœud (14) pour séparer la paire de brins de fil (5, 7).

7. Noueur de fil selon l'une quelconque des revendications 1 à 5,
**caractérisé en ce qu'**
un couteau de fil (13) pour séparer la paire de brins de fil (5, 7) est disposé sur le deuxième élément de serrage rotatif (22) du support de fil (18).

8. Noueur de fil selon l'une quelconque des revendications 1 à 7,
**caractérisé en ce que**
le premier élément de serrage (21) est fixe, et
**en ce que** le premier élément de serrage fixe (21) et le deuxième élément de serrage rotatif (22) du support de fil (18) comportent respectivement un évidement (31, 32) passant radialement à l'axe de support de fil (G) pour loger la paire de brins de fil (5, 7).

9. Noueur de fil selon l'une quelconque des revendications 1 à 8,
**caractérisé en ce que**
le premier élément de serrage (21) et le deuxième élément de serrage rotatif (22) du support de fil (18) comportent respectivement des surfaces de serrage (34, 35) tournées l'une vers l'autre pour serrer la paire de brins de fil (5, 7), et
**en ce que** les surfaces de serrage (34, 35) tournées l'une vers l'autre sont constituées de forme conique et de façon complémentaire l'une par rapport à l'autre.

10. Noueur de fil selon l'une quelconque des revendications 1 à 9,
**caractérisé en ce que**
le disque d'entraînement (20) comporte respectivement deux sections de denture (38, 39) pour entraîner le deuxième élément de serrage (22) du support de fil (18) et pour entraîner le crochet de noueur (9), qui s'étendent respectivement en partie en direction périphérique autour de l'axe d'entraînement (A).

11. Procédé de formation de deux nœuds (16, 33) dans un fil au moyen d'un noueur de fil (10) selon la revendication 1, sachant que le procédé comporte le déroulement de procédé suivant :
1. introduction d'une paire de brins de fil (5, 7) dans le support de fil au moyen d'un système d'introduction de fil (6) par le biais du crochet de noueur (9),
2. rotation du crochet de noueur (9) d'un tour complet pour former une première boucle dans la paire de brins de fil (5, 7) pour un premier nœud (16),
3. rotation du deuxième élément de serrage rotatif (22) pour serrer la paire de brins de fil (5, 7) dans le support de fil (18), sachant que la rotation du deuxième élément de serrage rotatif (22) commence après au moins une rotation partielle du crochet de noueur (9) et au moins la formation partielle de la première boucle,
4. séparation de la paire de brins de fil (5, 7) entre le crochet de noueur (9) et le support de fil (18) une fois que la paire de brins de fil (5, 7) a été serrée dans le support de fil,
5. tirage de la première boucle du crochet de noueur (9) pour former le premier nœud (16),
6. introduction de la paire de brins de fil (5, 7) au moyen du système d'introduction de fil (6) du support de fil par le biais du crochet de noueur (9),
7. rotation du crochet de noueur (9) d'un tour complet pour former une deuxième boucle dans la paire de brins de fil (5, 7) pour un deuxième nœud (33),
8. rotation du deuxième élément de serrage rotatif (22) pour libérer la paire de brins de fil (5, 7) du support de fil (18), sachant que la rotation du deuxième élément de serrage rotatif (22) ne commence qu'après au moins la rotation partielle du crochet de noueur (9) et au moins la formation partielle de la première boucle, et
9. tirage de la deuxième boucle du crochet de noueur (9) pour former le deuxième nœud (33).

12. Procédé selon la revendication 11,
**caractérisé en ce que**
la séparation de la paire de brins de fil (5, 7) a lieu en continuant à faire tourner le deuxième élément de serrage rotatif (22) avec un couteau de fil (13) fixé sur le deuxième élément de serrage rotatif (22).

13. Procédé selon la revendication 11 ou 12,
**caractérisé en ce que**
le tirage d'une boucle pour former un des nœuds (16, 33) a lieu par un levier de tirage de nœud (14).

14. Procédé selon la revendication 13,
**caractérisé en ce que**
la séparation de la paire de brins de fil (13) a lieu au moyen d'un couteau de fil sur le levier de dénouage (14) lors du tirage d'une boucle du crochet de noueur (9) pour former un des nœuds (16, 33).

15. Procédé selon l'une quelconque des revendications 11 à 14,
**caractérisé en ce que**
le premier élément de serrage (21) est fixe et
**en ce que** le premier élément de serrage fixe (21) et le deuxième élément de serrage rotatif (22) du support de fil (18) comportent respectivement un évidement (31, 32) passant radialement à l'axe de support du fil (G) pour loger la paire de brins de fil (5, 7),
**en ce que** pour serrer la paire de brins de fil (5, 7) après au moins la formation partielle de la première boucle, le deuxième élément de serrage rotatif (22) est tourné jusqu'à une position de rotation dans laquelle l'évidement du deuxième élément de serrage rotatif (22) et l'évidement du premier élément de serrage fixe (21) sont orientés en superposition l'un par rapport à l'autre,
**en ce qu**'ensuite la paire de brins de fil (5, 7) est acheminé dans les évidements des deux éléments de serrage (21, 22), et
**en ce que** finalement le deuxième élément de serrage rotatif (22) continue à tourner jusqu'à ce que la paire de brins de fil (5, 7) soit serrée entre les surfaces de serrage (34, 35) des deux éléments de serrage (21, 22).

16. Procédé selon l'une quelconque des revendications 11 à 15,
**caractérisé en ce qu'**
après la séparation de la paire de brins de fil (5, 7), le deuxième élément de serrage (22) rotatif continue à tourner jusqu'à ce que la position de rotation soit atteinte au début de la rotation et la rotation soit fasse une pause.
